# EUROPÄISCHE PATENTSCHRIFT

(11) **EP 2 394 918 B1**
(45) Veröffentlichungstag und Bekanntmachung des Hinweises auf die Patenterteilung: **24.07.2013**
(21) Anmeldenummer: 10165276.6
(22) Anmeldetag: 08.06.2010
(51) Int. Cl.: B65C 9/25, C09J 7/02, G09F 3/10

(54) **Verfahren zum Verkleben von Etiketten**
Method for bonding labels.
Procédé de collage d'étiquettes.

(43) Veröffentlichungstag der Anmeldung: 14.12.2011
(73) Patentinhaber: Henkel AG & Co. KGaA, 40589 Düsseldorf (DE)
(72) Erfinder: Herlfterkamp, Bernhard, 46236, Bottrop (DE); Pürkner, Eckhard, 40595, Düsseldorf (DE); Bialas, Norbert, 41542, Dormagen (DE)

(56) Entgegenhaltungen:
- EP-A2- 1 130 070
- WO-A1-2007/030584
- WO-A2-2007/015245
- DE-A1- 10 337 402
- US-A1- 2004 135 159
- US-A1- 2007 172 669

## Beschreibung

Die Erfindung betrifft ein Verfahren gemäß dem Oberbegriff des Anspruchs 1 zum Verkleben von Etiketten auf Substraten, bei dem die Klebstoffe in hochviskoser Form aufgetragen werden und unmittelbar danach vernetzt werden, wobei die Verklebungsstelle thermisch nur gering belastet wird.

Beschichtungen und Klebstoffe, die durch aktinische Strahlung vernetzen, sind bekannt. Es kann sich dabei um Elektronenstrahlung handeln oder es werden beispielsweise UV-Strahlen eingesetzt. Solche Klebstoffe dienen beispielsweise dazu, Etiketten auf Verpackungen, insbesondere auf rotationsförmige Verpackungen zu verkleben. Beispielsweise beschreibt die EP 1 634 817 einen Gegenstand, auf dem ein Etikett aufgebracht wird. Dabei wird ein Etikett aufgebracht, wobei die überlappenden Teile des Etikettes mit einem UV-härtbaren Schmelzklebstoff verbunden werden. Diese verklebten Etiketten werden danach einem thermischen Schrumpfvorgang ausgesetzt. Über die Anforderungen an den Klebstoff oder an die UV-Strahlung werden keine weiteren Ausführungen gemacht.

Es sind UV-Lampen bekannt. Diese können mit hoher Strahlungsleistung hergestellt werden. Dabei strahlen diese jedoch in einem breiten Frequenzbereich ab, nur ein Teil wird für die Vernetzungsreaktion genutzt. Außerdem ist festzustellen, dass durch den Betrieb der UV-Lampe gleichzeitig eine hohe Wärmestrahlung erzeugt wird. Nur ein Teil der elektrisch zugeführten Energie wird in UV-Strahlung umgesetzt, ein weiterer erheblicher Teil wird in Wärmestrahlung umgesetzt.

Weiterhin sind Excimer-Strahler bekannt. Diese haben den Vorteil, dass sie auf ganz engen Frequenzbereichen Strahlung abgeben können. Die Strahlenbreite beträgt dabei insbesondere weniger als 3 Nanometer. Es können auch entsprechende UV-Excimer-Strahler hergestellt werden. Diese haben eine hohe Strahlungsintensität. Es ist aber bekannt, dass ebenfalls bei dieser Strahlungsquelle erhebliche Mengen an Wärme frei werden. Deswegen ist es notwendig, dass diese Strahlungsquellen üblicherweise mit einer Wasserkühlung versehen wird, um eine ausreichende Langzeitstabilität der Strahlenquelle zu erhalten.

Es ist die EP 1 130 070 bekannt. Diese beschreibt einen thermisch schrumpfbaren Film, der auch als Etikett ausgestaltet sein kann, wobei auf dem Film ein strahlenhärtbarer Klebstoff auftragen sein kann. Dieser Klebstoff hat eine dünne Viskosität, beispielsweise bei Anwendungstemperatur kleiner 2000 mPas. Der Klebstoff wird durch UV-Strahlen vernetzt. Die EP 1 130 070 offenbart auch ein Verfahren gemäß dem Oberbegriff des Anspruchs 1.

Weiterhin ist die DE 10 2007 015 801 bekannt. Diese beschreibt durch Strahlung vernetzbare Schmelzklebstoffe, die ein PU-Prepolymer enthalten, das ungesättigte Gruppen enthält, sowie weitere Verbindungen, die radikalisch polymerisierbare Doppelbindungen aufweisen. Diese Schmelzklebstoffe können beispielsweise auf Etiketten aufgetragen werden und danach mit UV- oder Elektronenstrahlung bestrahlt werden, um zu vernetzen. Die verklebten Etiketten können danach einen thermischen Schrumpfungsprozess unterzogen werden. Über die UV-Strahlung und die Strahler werden keine Aussagen gemacht.

Wie bekannt, können Klebstoffe durch UV-Strahlen vernetzt werden. Dabei sind flüssige Klebstoffe oder Schmelzklebstoffe bekannt, die als UV-vernetzbare Schichten in flüssigem oder aufgeschmolzenen Zustand aufgetragen werden können. Während bei Schmelzklebstoffen durch die Abkühlung eine Anfangshaftung gegeben wird und danach durch die UV-Strahlung eine endgültige Verklebung erzielt wird, ist bei flüssigen Klebstoffen eine UV-Bestrahlung notwendig, wobei der Klebstoff vorher nicht belastbar ist.

Die bekannten eingesetzten UV-Strahler strahlen über ein relativ breites UV-Spektrum ab. Damit ist sichergestellt, dass je nach Klebstofftyp eine ausreichende Strahlungsmenge für die Vernetzung bereitgestellt wird. Diese UV-Strahler haben jedoch den Nachteil, dass ein erheblicher Teil der zugeführten Energie als Wärmestrahlung auf die zu verklebenden Substrate gestrahlt wird. Das ist unter Kostenaspekten nachteilig. Weiterhin ist es ungünstig, dass durch die erhöhte Wärmebelastung beispielsweise Schmelzklebstoffe erweichen, so dass die ursprüngliche Haftung durch den erstarrten Klebstoff gemindert wird oder nicht gegeben ist. Weiterhin werden auch flüssige Klebstoffe in ihrer Temperatur angehoben, wobei die Viskosität deutlich sinkt. Das kann zu einem Verrutschen der zu verklebenden Etiketten durch den Verarbeitungsprozess führen. Weiterhin können auch die Substrate geschädigt werden. Da es sich dabei um dünne Folien handelt, sind diese auch durch thermische Strahlung angreifbar. Das kann zu einer mechanischen Schwächung führen, es kann aber auch zu einer optischen Beeinträchtigung führen. Außerdem können die Folien durch die Wärme in der Maßhaltigkeit geschädigt werden, beispielsweise kann ein vorzeitiges Schrumpfen auftreten.

Es sind Versuche bekannt, die thermische Belastung zu vermindern. Beispielsweise kann man die Belichtungszeiten möglichst kurz halten. Eine andere Überlegung zielt dahin, durch einen Luftstrom die entstehende Wärme abzuführen und so die Substrate kühl zu halten. Eine Vergrößerung des Abstandes zwischen Strahlenquelle und das Substrat wird ebenfalls günstig wirken, hat aber den Nachteil, dass dann auch die UV-Strahlung an der Klebstoffschicht vermindert wird. Das hat zur Folge, dass die Vernetzung unvollständig ist, oder die Bestrahlung länger durchgeführt werden muss.

Auch ein Austausch der UV-Quellen durch UV-Excimer-Strahler ist nicht vorteilhaft. Excimer-Strahler strahlen zwar ein sehr intensives und sehr enges Spektrum des Lichtes aus, allerdings ist die Wärmeentwicklung dieser Strahler sehr hoch. Weiterhin ist dann sicherzustellen, dass die zu vernetzenden Doppelbindungen oder die üblicherweise in dem Klebstoff enthaltenen Fotoinitiatoren auf die Strahlenlänge des Excimer-Strahlers angepasst werden müssen. Da die Excimer-Strahlen nur ein sehr enges Spektrum abstrahlen, ist die Auswahl der Fotoinitatoren dadurch eingeschränkt.

Aufgabe der vorliegenden Erfindung ist es deswegen, ein Verfahren bereitzustellen, bei dem transparente Etiketten verklebt werden können, unter Verwendung von UV-Vernetzbaren Klebstoffen. Dabei soll die thermische Belastung der Klebstoffschicht und der Substrate gering gehalten werden, es soll jedoch eine ausreichende Vernetzung in kurzer Zeit sichergestellt werden. Damit kann in den vorhandenen Etikettiermaschinen ein hoher Durchsatz erhalten werden.

Die Erfindung wird gelöst durch ein Verfahren zum Verkleben von Etiketten mit einem UV-vernetzbaren Klebstoffs, wobei der Klebstoff in der Wärme auf ein Substrat aufgetragen wird, danach mit einem zweiten Substrat verklebt wird, anschlie-βend mit einer UV-Strahlenquelle bestrahlt wird, wobei der Klebstoff eine Viskosität von weniger als 5000 mPas bei einer Temperatur zwischen 20 und 80 °C aufweist, wobei die Temperatur während des Bestrahlungsvorgangs im Substratbereich unter 80 °C liegt. Erfindungsgemäß werden als UV-Quelle UV emittierende LED-Strahlenquellen eingesetzt. Dabei weist die Strahlenquelle eine Frequenzbreite zwischen 10 bis 50 nm auf, die Bestrahlungsdauer betragt 0,1 bis 1 Sekunde und der Abstand zwischen Etikett und Strahler beträgt 10 mn bis 10 cm.

Das erfindungsgemäße Verfahren kann mit üblichen UV-vernetzenden Klebstoffen durchgeführt werden. Es kann sich dabei um viskose Klebstoffe handeln, es können aber auch Schmelzklebstoffe eingesetzt werden. Dabei werden die Klebstoffe auf ein erstes Substrat, beispielsweise ein Etikett, aufgetragen, das danach mit einem zweiten Substrat, beispielsweise mit einem Hohlkörper, verklebt wird. Dabei kann der Klebstoff vollflächig aufgetragen werden, oder es werden nur ausgewählte Randbereiche des Etiketts mit dem Klebstoff beschichtet. Die Verklebung kann zum zweiten Substrat hin erfolgen. Eine andere Arbeitsweise arbeitet so, dass ein Etikett an einer Randseite so beschichtet wird, dass diese danach mit einem gegenüberliegenden Teil der Etikettoberfläche als zweites Substrat verklebt wird, sodass sich sogenannte Rundum-Etiketten bilden. Gegebenfalls kann zusätzlich auch eine Verklebung zu dem Hohlkörper erfolgen.

Die zu verklebenden Etiketten bestehen im allgemeinen aus thermoplastischen Kunststoffen wie Polyethylen, Polypropylen, Polystyrol, Polyvinylchlorid, Polyester oder Zellglas. Bevorzugt ist es, Etiketten aus einer Folie auf der Basis von unpolaren Kunststoffen, insbesondere von orientierten Polyolefinen, wie Polypropylen (OPP), einzusetzen. Die Etiketten können farblos sein, sie können aber auch eingefärbt und/oder bedruckt sein. Es ist zweckmäßig, dass die Etiketten zumindest an den zu verklebenden Stellen für UV-Strahlung durchlässig sind. Es kann sich um Einschicht- oder Mehrschichtetiketten handeln. An die Form der Etiketten werden keine besonderen Anforderungen gestellt. Bevorzugt handelt es sich um Rundumetiketten. Beispielsweise können Etiketten für Aerosoldosen, Konturflaschen oder Flaschenverschlüsse verklebt werden. Es kann danach eine weitere Verarbeitung, wie anschließendes Aufschrumpfen, durchgeführt werden.

Als Substrate zum Verkleben der Etiketten oder Folien sind übliche Verpackungen, wie Dosen, Flaschen, Kartuschen oder Hobbocks aus Metall, Glas oder Kunststoff geeignet. Es kann sich um rotationssymmetrische Gegenstände handeln, aber auch eckige Hohlkörper sind möglich. Solche Hohlkörper sind beispielsweise für Mineralwasser und Erfrischungsgetränke im Gebrauch.

Die Klebstoffe für ein erfindungsgemäßes Verfahren können flüssig sein oder es handelt sich um Schmelzklebstoffe. Dabei sollen die Klebstoffe insbesondere lösemittelfrei vorliegen. Weiterhin kann es sich um radikalisch vernetzende oder um kationisch vernetzende Klebstoffe handeln, die durch UV-Strahlung vernetzbar sind. Die Klebstoffe werden in flüssigem oder aufgeschmolzenem Zustand aufgetragen. Durch die Wahl der Temperatur kann die Viskosität beeinflusst werden. Es handelt sich beispielsweise um Haftklebstoffe, die auch nach Vernetzung noch klebrige Eigenschaften aufweisen. Solche Klebstoffe sind im Prinzip bekannt. Besonders geeignet sind Klebstoffe, die über ungesättigte Doppelbindungen vernetzen, insbesondere Klebstoffe enthaltend (Meth)acrylatgruppen oder in einer anderen Ausführungsform Klebstoffe, die über kationische Initiatoren und Epoxidgruppen an den Polymeren vernetzen.

Ein Bestandteil für geeignete Klebstoffe sind mono-, di- oder höherfunktionelle Acrylat- oder Methacrylatester oder ihre Gemische. Solche Acrylat- oder Methacrylatester umfassen beispielsweise Ester der Acrylsäure oder Methacrylsäure mit aromatischen, aliphatischen oder cycloaliphatischen Polyolen oder von Polyetheralkoholen.

Als monofunktioneller Acrylatester können beispielsweise Ester der (Meth)acrylsäure mit einwertigen Alkoholen eingesetzt werden. Beispielsweise handelt es sich dabei um aliphatische und/oder aromatische Alkohole mit einer OH-Gruppe. Die Anzahl der C-Atome kann bevorzugt zwischen 1 bis 30 C-Atome betragen, wie Methanol, Ethanol, Propanol, Butanol, Hexanol, Octanol oder ihre Isomere oder Alkylphenole. Beispiele für geeignete Verbindungen sind 2-Ethylhexylacrylat, Octyl-/Decylacrylat, Isobornylacrylat, 3-Methoxybutylacrylat, 2-Phenoxyethylacrylat, Benzylacrylat oder 2-Methoxypropylacrylat.

Als Polyole zur Herstellung von multifunktionellen (Meth)acrylatestern können eine Vielzahl von Polyolen eingesetzt werden. Beispielsweise sind dies aliphatische Polyole mit 2-4 OH-Gruppen pro Molekül und 2 bis etwa 30 C-Atomen. Geeignete aliphatische Polyole sind beispielsweise Ethylenglykol, Propandiol-1,2 oder -1,3, Butandiol-1,4, Butandiol-1,3, Butandiol-2,3, Butendiol-1,4, Pentandiol-1,5, Pentendiole, Hexandiol-1,6, Octandiol-1,8, Dodecandiol und höhere Homologe, Isomere und Gemische solcher Verbindungen. Ebenfalls geeignet sind höherfunktionelle Alkohole wie beispielsweise Glycerin, Trimethylolpropan, Pentaerythrit oder Zuckeralkohole, wie Sorbit oder Glucose, sowie oligomere Ether oder Umsetzungsprodukte mit Ethylen- oder Propylenoxid. Es können als Polyolkomponente zur Herstellung der Acrylat- oder Methacrylatester die Umsetzungsprodukte niedermolekularer, polyfunktioneller Alkohole mit Alkylenoxiden, sogenannte Polyetherpolyole, eingesetzt werden. Die Alkylenoxide weisen vorzugsweise zwei bis etwa vier C-Atome auf.

Beispiele für solche (Meth)acrylatester sind Neopentylglykoldi(meth)acrylat, 1,8-Octandioldi(meth)acrylat, Butandioldi(meth)acrylat, 1,6-Hexandioldi(meth)acrylat, Trimethylolpropantri(meth)acrylat, Pentaerythrit-tetra(meth)acrylat, sowie (Meth)-acrylatester des Sorbits und anderer Zuckeralkohole, Ethylenoxid-modifizierte Ne-opentylglykoldi(meth)acrylate, Propylenoxid-modifizierte Neopentylglykoldi(meth)-acrylate, Ethylenoxid-modifizierte oder Propylenoxid-modifizierte 1,6-Hexandioldi(meth)acrylate, Polyethylenglykoldi(meth)acrylate, Polypropylenglykol-di(meth)acrylate Pentaerythritoltri(meth)acrylat, Dipentaerythritol-tetra(meth)acrylat oder Gemische davon.

Besonders geeignet sind Umsetzungsprodukte auf Basis von Polyetherdi- oder triolen oder Polyalkylendiolen mit (Meth)acrylestern mit einem Molekulargewicht (Mn) von 200 bis 3000 g/mol , vorzugsweise von 300 bis 2000 g/mol, insbesondere bis etwa 1000 g/mol.

Ein weiterer Bestandteil der erfindungsgemäß geeigneten Klebstoffe sind Urethan-(meth)acrylate. Es handelt sich dabei um Umsetzungsprodukte von Alkoholen, insbesondere Monoalkoholen, Diolen und/oder Triolen mit Di- oder Tri-Isocyanatverbindungen. Dabei werden die Mengenverhältnisse so gewählt, dass endständig NCO-funktionalisierte Prepolymere erhalten werden. Insbesondere sollen die Prepolymere linear sein, d.h. überwiegend aus Monoalkoholen oder Diolen und Diisocyanaten hergestellt werden. Eine zusätzliche Verwendung von geringen Anteilen an trifunktionellen Polyolen oder Isocyanaten ist möglich. Solche PU-Prepolymere können dann mit OH-reaktiven (Meth)acrylverbindungen zu den PU-(meth)-acrylaten umgesetzt werden.

Es können die bekannten monomeren Di- oder Triisocyanate eingesetzt werden, wie aliphatische oder aromatische Isocyanate. Zur Verwendung als Polyol geeignet sind beispielsweise niedermolekulare Polymere ausgewählt aus Polyester-, Polyether-, Polycarbonatpolyolen, die terminale OH-Gruppen aufweisen, oder aliphatische oder aromatische 1- bis 3-wertige Alkohohole, mit einem Molekulargewicht (Mn) von etwa 200 bis 5000 g/mol (zahlenmittleres Molekulargewicht, MN, wie durch GPC bestimmbar). Im Falle von Polyetherpolyolen soll das Molekulargewicht zwischen 200 bis 2000 g/mol liegen, insbesondere zwischen 400 und 1000 g/mol. Im Falle von Polyesterpolyolen soll das Molekulargewicht bevorzugt kleiner 1500 g/mol betragen.

Die Umsetzung der Polyole mit den Polyisocyanaten kann in bekannter Weise beispielsweise in Gegenwart von Lösemitteln erfolgen, bevorzugt wird jedoch in lösemittelfreier Form gearbeitet. Zur Beschleunigung der Reaktion können die bekannten Maßnahmen, wie Temperaturerhöhung oder Katalysatorzusatz, angewendet werden. In einer weiteren Reaktion werden die NCO-Gruppen anschlie-βend mit Verbindungen umgesetzt, die eine funktionelle Gruppe tragen, die mit Isocyanaten reagieren kann und als weitere funktionelle Gruppe eine durch radikalische Polymerisation vernetzbare Doppelbindung aufweisen. Diese habe üblicherweise ein Molekulargewicht von weniger als 500 g/mol.

Beispiele für solche Verbindungen sind Ester von α-β-ungesättigten Carbonsäuren mit niedermolekularen insbesondere aliphatischen Alkoholen, die im Alkylrest noch eine weitere OH-Gruppe tragen. Entsprechende OH-Gruppen tragende Ester sind beispielsweise 2-Hydroxyethyl(meth)acrylamid, 2-Hydroxyethyl(meth)acrylat, 2-Hydroxypropyl(meth)acrylat, 3-Hydroxypropyl(meth)acrylat, 3-Hydroxypropyl-(meth)acrylamid, N-Hydroxyethyl(meth)acrylamid, Umsetzungsprodukte von Glycidylethern oder-estern mit Acryl- oder Methacrylsäure, Addukte von Ethylenoxid oder Propylenoxid an (Meth)acrylsäure, Umsetzungsprodukte von Hydroxylacrylaten mit ε-Caproiacton oder partielle Umesterungsprodukte von Poylalkoholen, wie Pentaerythrit, Glycerin oder Trimethylolpropan, mit (Meth)acrylsäure.

In dem Haftklebstoff können zusätzlich Hilfs- und Zusatzstoffen eingesetzt werden, wie beispielsweise Weichmacher, Stabilisatoren, Antioxidantien, Haftvermittler, Harze, nicht reaktive Polymere, Farbstoffe, Füllstoffe oder Pigmente.

In einer Ausführungsform enthält der geeignete Haftklebstoff mindestens ein klebrigmachendes Harz. Das Harz bewirkt eine zusätzliche Klebrigkeit. Es können grundsätzlich alle Harze eingesetzt werden, die mit dem Haftklebstoff und dem Klebstoffvorläufer verträglich sind, d.h. ein weitgehend homogenes Gemisch bilden. Es handelt sich dabei insbesondere um Harze, die einen Erweichungspunkt von 70 bis 140°C (Ring-Ball-Methode, DIN 52011) besitzen. Es sind dieses beispielsweise aromatische, aliphatische oder cycloaliphatische KohlenwasserstoffHarze, modifizierte oder hydrierte Versionen oder natürliche Harze, wie Terpen-oder Kolophoniumharze.

Als weiterer Bestandteil des Haftklebstoffs bzw. eines Vorläufers können Photoinitiatoren eingesetzt werden, die bei Bestrahlung mit UV-Licht einer Wellenlänge von etwa 215 nm bis etwa 480 nm dazu in der Lage sind, eine radikalische Polymerisation olefinisch ungesättigter Doppelbindungen zu initiieren. Im Rahmen der vorliegenden Erfindung sind grundsätzlich alle handelsüblichen Photoinitiatoren geeignet, die mit dem erfindungsgemäß geeigneten Haftklebstoffvorläufer verträglich sind. Beispielsweise sind dies alle Norrish-Type I fragmentierenden und Norrish -Typ II Substanzen. Solche Initiatoren sind dem Fachmann bekannt und können beispielsweise unter den Handelsnamen Irgacure®, Darocure®, Speedcure® erworben werden. Weiterhin geeignet sind Benzophenon, Thioxanthon, 2,4,6-Trimethylbenzoldiphenylphosphinoxid und entsprechende Derivate.

Gegebenenfalls können als nicht reaktive Polymere geringe Anteile an thermoplastischen Polyethern, Polyestern, Polyolefinen, Polyacrylaten oder Polyamiden zugesetzt werden. Diese sollen keine strahlenreaktiven Gruppen aufweisen, es können aber andere funktionelle Gruppen enthalten sein, wie OH-, NH- oder Epoxygruppen. Diese Polymere beeinflussen die Kohäsion des vernetzten Klebstoffs.

Die oben beschriebenen Klebstoffe sind viskose Haftklebstoffe, die in der Regel bei 80°C eine Viskosität von weniger als 5000 mPas (Brookfield RVT, bei angegebener Temperatur, 50 Upm, EN ISO 2555) aufweisen. In bevorzugten Ausführungsformen der Erfindung wird die Viskosität des Klebstoffs so gewählt, dass er bei typischen Verarbeitungstemperaturen eine Viskosität von 200 mPas bis etwa 3000 mPas aufweist, insbesondere unter 1500 mPas. Geeignete Verarbeitungstemperaturen sind beispielsweise 20 bis etwa 80°C, insbesondere unter 50°C.

Eine andere Ausführungsform des Verfahrens setzt UV-vernetzende Schmelzklebstoffe ein. Es handelt sich dabei ebenso um Klebstoffe mit (Meth)acrylatgruppen, die aber durch die Auswahl des Polymergrundgerüsts bei Raumtemperatur fest sind und erst bei Temperaturen oberhalb von 90 °C schmelzen. Es können unterschiedliche Klebstoffe in dem erfindungsgemäßen Verfahren eingesetzt werden. Als besonders geeignet haben sich dabei aber Klebstoffe erwiesen auf Basis von Polyurethanen, die eine oder mehrere (Meth)acrylatgruppen im Polymer einreagiert enthalten.

Eine spezielle Ausführungsform setzt Schmelzklebstoffe ein, die ein Polyurethanpolymer enthalten, das mindestens eine durch Strahlung vernetzbare (Meth)acry-latgruppe enthält und gegebenenfalls Seitenketten, die keine weiteren radikalisch vernetzbaren Gruppen aufweisen. Zusätzlich enthält der Schmelzklebstoff mindestens einen radikalischen Photoinitiator, der entweder im Polymer gemischt und/oder insbesondere anreagiert an der PU-Polymerkette vorliegt.

Das Polyurethanprepolymer als Ausgangsbasis wird durch Umsetzung von Diolen und/oder Triolen mit Di- oder Tri-Isocyanatverbindungen hergestellt. Dabei werden die Mengenverhältnisse so gewählt, dass endständig NCO-funktionalisierte Prepolymere erhalten werden. Insbesondere sollen die Prepolymere linear sein, d.h. überwiegend aus Diolen und Diisocyanaten hergestellt werden. Eine zusätzliche Verwendung von geringen Anteilen an trifunktionellen Polyolen oder Isocyanaten ist möglich. Die bei der Synthese der Prepolymeren einsetzbaren Polyole und Polyisocyanate sind dem Fachmann bekannt.

Als di-funktionelle oder tri-funktionelle Polyole können die bekannten Polyole mit einer Molekulargewicht bis 50000 g/mol ausgewählt werden. Sie sollen beispielsweise auf Basis von Polyethern, Polyestern, Polyolefinen, Polyacrylaten oder Polyamiden ausgewählt werden, wobei diese Polymere zusätzlich OH-Gruppen aufweisen müssen. Bevorzugt sind Polyole, die endständige OH-Gruppen aufweisen, insbesondere solche auf Basis von Polyethern oder Polyestern. Im Falle von Polyetherpolyolen soll das Molekulargewicht zwischen 200 bis 20000 g/mol liegen, insbesondere zwischen 400 und 6000 g/mol. Im Falle von Polyesterpolyolen soll das Molekulargewicht bevorzugt kleiner 10000 g/mol betragen, insbesondere zwischen 600 und 2500 g/mol (zahlenmittleres Molekulargewicht, M_{N}, über GPC gegen Polystyrolstandard bestimmbar).

Das PU-Prepolymer soll noch reaktive NCO-Gruppen aufweisen. Diese werden anschließend mit solchen Verbindungen umgesetzt, die eine funktionelle Gruppe tragen, die mit Isocyanaten reagieren kann und als weitere funktionelle Gruppe eine durch radikalische Polymerisation vernetzbare Doppelbindung aufweisen. Beispiele für solche Verbindungen sind Ester von α-β-ungesättigten Carbonsäuren mit niedermolekularen insbesondere aliphatischen Alkoholen, die im Alkylrest noch eine weitere OH-Gruppe tragen. Geeignete difunktionelle Verbindungen sind oben bereits beschrieben. Die Menge der OH-funktionellen Verbindung mit radikalisch polymerisierbaren Doppelbindungen wird so gewählt, dass 20 bis 95 Mol-% bevorzugt 25 bis 85 Mol-% bezogen auf die NCO-Gruppen des PU-Prepolymeren eingesetzt werden.

Weiterhin wird das NCO-reaktive PU-Prepolymer mit mindestens einer Verbindung umgesetzt, die mindestens eine mit Isocyanaten reaktive Gruppe aufweist, darüber hinaus keine weitere unter radikalischen Bedingungen poylmerisierbare Gruppe besitzt. Beispiele für solche mit Isocyanate reaktive Gruppen sind OH-, SH- oder NHR-Gruppen, wie Alkohole mit 1 bis 36 C- Atomen, entsprechende Thioverbindungen oder monohydroxy- oder monoamino-funktionelle Polymere. Insbesondere soll die funktionelle Gruppe eine OH-Gruppe sein.

Die Menge der mit NCO-Gruppen reaktiven monofunktionellen Verbindung wird so gewählt, dass 1 bis 50 Mol-% bezogen auf die NCO-Gruppen des PU-Prepolymeren umgesetzt werden. In einer Ausführungsform werden die Mengen so gewählt, dass die Summe der monofunktionellen Verbindung und der Verbindung mit den strahlungsreaktiven Gruppen zusammen der Menge Isocyanatgruppen entspricht. Eine andere Ausführungsform setzt einenTeil der NCO-Gruppen mit Verbindungen um, die eine UV-Initiatorgruppe aufweisen und eine mit NCO reaktive Gruppe. Damit wird ein reaktives Prepolymer erhalten, das einen Initiator einreagiert enthält und so keine Abspaltprodukte keine bei der Vernetzung ergibt. Die Umsetzungsverfahren zur Umsetzung der reaktiven PU-Prepolymere sind dem Fachmann bekannt. Dabei kann eine Reaktion im Gemisch stattfinden, oder die Bestandteile werden nacheinander umgesetzt. Nach der Umsetzung erhält man statistisch funktionalisierte PU-Polymere. Das PU-Polymer soll im wesentlichen frei von Isocyanatgruppen sein.

Der Schmelzklebstoff kann weiterhin die oben bereits ausgeführten Additive enthalten, wie Photoinitiatoren, Photosensibilisatoren, Reaktivverdünner beispielsweise auf Acrylatbasis, weitere Polymere, Weichmacher, Stabilisatoren, Antioxidantien, Haftvermittler, Harze, Farbstoffe oder Füllstoffe. Die Auswahl und die Eigenschaften der Additive sind dem Fachmann bekannt.

Ein entsprecht geeigneter Schmelzklebstoff hat eine Viskosität von 200 mPas bis 5000 mPas, insbesondere von 500 mPas bis 3000 mPas bei einer Temperatur unter 130 °C. Die Temperatur zum Auftragen liegt im Bereich von 50 °C bis 150 °C, bevorzugt im Bereich von 70 °C bis 130 °C. Diese Schmelzklebstoffe weisen die erforderliche geeignete Viskosität bei Verarbeitungstemperaturen auf, wie sie beispielsweise bei der Verwendung auf temperaturempfindlichen Etiketten, zweckmäßig sind.

Für eine erfindungsgemäße Verklebung sind Schmelzklebstoffe oder flüssige Klebstoffe geeignet, soweit die Vernetzung durch Bestrahlung mit UV-Licht erzielt werden kann. Da die Klebstoffe in dünnen Schichten aufgetragen werden sollen, sind insbesondere flüssigen Haftklebstoffe geeignet, die bei einer Temperatur von maximal 80 °C eine Viskosität von unterhalb von 5000 mPas aufweisen, insbesondere unter 3000m Pas.

Die erfindungsgemäß geeigneten flüssigen oder geschmolzenen Klebstoffe sollen auf ein Substrat aufgetragen werden. Dabei kann der Klebstoff beispielsweise mit einer Düse oder mit einer Spritzvorrichtung auf die Oberfläche aufgebracht werden. Erfindungsgemäß besonders bevorzugt ist es jedoch, den Haftklebstoff im durch Walzen oder im Druckverfahren auf die Oberfläche aufzutragen. Dabei kann der Klebstoff auf den zu etikettierenden Gegenstand aufgetragen werden, eine andere bevorzugte Ausführungsform trägt den Klebstoff auf eine Seite des Etiketts auf. Das kann vollflächig geschehen, es ist möglich Muster aufzutragen oder es werden nur einzeln vorgesehene Bereiche der Oberfläche, beispielsweise Randbereiche mit dem Klebstoff beschichtet. Durch die niedrige Applikationstemperatur des Haftklebstoffs kann sichergestellt werden, dass die zu beschichtende Fläche, d.h. beispielsweise die Folie, thermisch nicht beansprucht wird.

Es kann vorteilhaft sein, eine Applikationstemperatur von bis zu 130 °C zu wählen, bevorzugt bis zu 80 °C, insbesondere bis zu 50 °C. Dabei ist das Anfließen an die Substratoberfläche und damit die Haftung verbessert, durch die niedrige Viskosität kann auch eine dünne Schichtdicke erzielt werden.

Nach dem Auftragen des Klebstoffs auf eine Fläche wird diese mit dem zweiten Substrat verklebt. Dabei kann auch ein Etikett mit einem anderen Bereich des gleichen Etiketts verklebt werde. Das führt dann zu sogenannten Rumdum-Etiketten. Durch die dünne Klebstoffschicht kühlt der Klebstoff ab und eine erste Anfangshaftung wird erhalten.

Nach der Applikation des erfindungsgemäßen Schmelzklebstoffes und dem Zusammenfügen der zu verklebenden Teile, beispielsweise der verklebte Etiketten oder des Etiketts auf dem Hohlkörper, wird der erfindungsgemäße Schmelzklebstoff mit einer ausreichenden UV- Dosis bestrahlt, damit der Klebstoff seine endgültige Form erreicht, Haftung sowie Kohäsion aufbaut und die Substrate verbindet. Dabei soll die Dauer der Bestrahlung möglichst kurz sein. Die Dauer ist von dem Klebstoff, der Strahlungsintensität und der Durchlässigkeit für UV-Strahlen abhängig.

Die geeignete UV-Strahlung ist bekannt, sie liegt bei einer Wellenlänge von 210 bis 450 nm. Dabei beträgt die Bestrahlungszeit erfindungsgemäß von 0,1 Sekunden bis 1 Sekunde. Die Strahlungsintensität kann dem Klebstoff und dem eingesetzten Initiator angepasst werden. Durch die Bestrahlung vernetzt der Klebstoff und verbindet die Substrate endgültig.

Erfindungsgemäß ist es notwendig, dass eine UV-Quelle ausgewählt wird, die eine verminderte Wärmeemission besitzt. Es handelt sich dabei um an sich bekannte Lichtemitierende Dioden (LED). Diese können auch so hergestellt werden, dass insbesondere UV-Strahlen erzeugt werden. Dabei sind Wellenlängen kleiner 450 nm oder auch kleiner 400 nm zu erzeugen. Solche LED Systeme haben den Vorteil, dass sie UV-Licht in einem engen Frequenzbereich ausstrahlen. Bei dem erfindungsgemäß geeigneten LED liegt dieser Frequenzbereich zwischen 10 bis 50 nm. Es ist darauf zu achten, dass der Strahlungsbereich in dem Empfindlichkeitsbereich des UV-härtbaren Klebstoffs liegt.

Durch die Auswahl der LED -Quellen wird eine hohe Energieausbeute sichergestellt. Weiterhin ist die Abstrahlung im IR-Bereich vermindert. Die Wärmeabstrahlung wird vermindert. Dabei soll die Temperatur an dem zu verklebenden Etikett unterhalb von 50 °C liegen . Der Abstand zwischen Etikett und Strahler beträgt erfindungsgemäß 10 mm bis 10 cm. Bei kürzeren Entfernungen der Lichtquelle ist die Bestrahlungsintensität höher, die Bestrahlungszeit kann verkürzt werden. Durch die ausgewählte LED-UV-Quelle kann sichergestellt werden, dass die Klebstoffschicht nicht wesentlich erwärmt wird und eine Schwächung der Anfangsverklebung erfolgt. Die Temperaturbegrenzung kann gegebenenfalls durch weitere Maßnahmen unterstützt werden.

Eine bevorzugte Anwendungsform des erfindungsgemäßen Verfahrens ist die Verklebung von Hohlkörpern mit Etiketten, insbesondere mit thermisch schrumpfbaren Etiketten. Hohlkörper sind z.B. Flaschen, Dosen, Hobbocks oder Kartuschen. Es kann sich um rotationssymmetrische Gegenstände handeln, aber auch eckige Hohlkörper sind möglich. Sie bestehen beispielsweise aus Metall, Glas oder thermoplastischen Kunststoffen. Bevorzugt können polare Kunststoffgebinde verklebt werden, insbesondere aus Polyester. Solche Hohlkörper sind beispielsweise für Mineralwasser und Erfrischungsgetränke im Gebrauch.

Durch die Auswahl der UV-Strahlungsquelle als LED-Strahler ist es möglich, die thermische Belastung der Kunststoffsubstrate zu vermindern. Dabei ist eine Schädigung der verklebten Substrate, beispielsweise der Etikettenfolien, deutlich geringer. Es ist möglich, entweder die UV-Strahlungsintensität zu erhöhen, wobei dann kürzere Bestrahlungszeiten möglich sind. Ein weiterer Vorteil der erfindungsgemäßen Verfahrensweise besteht darin, dass durch die geringe Wärmestrahlung der ausgewählten UV-Quelle der Energieverbrauch geringer ist. Weiterhin ist es möglich, den Abstand der Strahlungsquelle zu den zu bestrahlenden Substraten zu verringern. Dabei wird durch die geringere Wärmebelastung der Verklebung auch die im noch nicht vernetzten Zustand geringere Haftungseigenschaften der Klebstoffschicht weniger beeinträchtigt.

Die erfindungsgemäßen Vorteile werden sowohl bei radikalisch vernetzenden Klebstoffsystemen erhalten, es ist jedoch auch möglich, über kationische Initiatoren vernetzende Klebstoffe einzusetzen. Ebenso ist es möglich, durch die Verwendung von Photosensibilisatoren in den Klebstoffen, das Empfindlichkeitsspektrum der Klebstoffe so anzupassen, dass sie im Rahmen der Strahlungsfrequenz der LED-Strahlungsquelle liegen. Durch die erfindungsgemäße Verfahrensweise wird ein erheblicher Vorteil in der Prozesssicherheit und der Prozessgeschwindigkeit der Verklebung von Etiketten auf Flaschen erzielt.

### Beispiel 1:

| | |
|---|---|
| Es wird ein Klebstoff hergestellt aus: | |
| 2-methyl-1,3-Butadien/1,3-Butadien Copolymer , | |
| Hydriert, Oxidiert mit Hydroxy-Endgruppen | 25 % |
| Triaryl sulfonium Salz -UV-Initiator | 1 % |
| Naphtenisches Petroleum Öl | 20 % |
| Cyclopentadien Harz | 54 % |
| | |
| Viskosität: ca. 800 mPas bei 100°C | |

### Beispiel 2:

| | |
|---|---|
| Urethan Acrylate Oligomere | 60 % |
| Hydroxy-2-methylpropiophenon (Initiator) | 10% |
| Naphtenisches Petroleum Öl | 10% |
| Kohlenwasserstoffharz (C9-C10) | 20 % |
| Viskosität: ca. 2500 mPas bei 100°C | |

### Beispiel 3:

| | |
|---|---|
| Poly BD | 4% |
| Triaryl sulfonium Salz -UV-Initiator | 2 % |
| Polycaprolacton Diol | 5 % |
| Epoxycyclohexanemethyl-3,4-epoxy- | |
| cyclohexanecarboxylate | 25 % |
| Phthalsäuere-1,6-hexanediol polyester | 64 % |
| Viskosität: ca.1400 mPas bei 50°C | |
| | |
| Angaben in Gew.-%, die Summe soll 100 ergeben. | |

### UV-Quelle A:

LED Punktstrahler, Wellenlänge 365 nm und einer Leistung von 3.2 W/cm2 bis 8.6 W/cm2
Abstand: 10 mm - 20 mm zum Substrat
Bestrahlungszeit: weniger als Sekunde.

### UV-Quelle B:

LED Flächenstrahler, Wellenlänge 365 nm und einer Leistung von 300mW/cm2,
Abstand von 20 mm zum Substrat,
Bestrahlungsdauer ca. 1 Sekunde.

Es wurde eine OPP-Folie (25 µm, 10 x 20 cm) mit einem Klebstoff 1 cm breit am Rand beschichtet (ca. 20 µm). Unmittelbar danach wird mit einer zweiten Folie verklebt und mit einer UV-Strahlenquelle kurz bestrahlt.

Nach 15 min. wird die Verklebung geprüft. Dabei ist ein Substratbruch zu beobachten.

## Patentansprüche

1. Verfahren zum Verkleben von Etiketten mit einem UV-vernetzbaren Klebstoff, wobei der Klebstoff in der Wärme auf ein Substrat aufgetragen wird, danach mit einem zweiten Substrat verklebt wird, anschließend mit einer UV-Quelle bestrahlt wird, wobei der Klebstoff eine Viskosität weniger als 5000 mPas bei einer Temperatur zwischen 20 und 80 °C aufweist, wobei die Temperatur während des Bestrahlungsvorgangs im Substratbereich unter 50°C liegt, **dadurch gekennzeichnet, dass** als UV-Quelle UV emittierende LED-Strahlenquellen eingesetzt werden und dass die Strahlenquelle eine Frequenzbreite zwischen 10 bis 50 nm aufweist, die Bestrahlungsdauer 0,1 sekunden bis 1 Sekunde beträgt und der Abstand zwischen Etikett und Strahler 10 mm bis 10 cm beträgt.

2. Verfahren nach Anspruch 1, **dadurch gekennzeichnet, dass** die Bestrahlung durch ein transparentes Substrat durchgeführt wird.

3. Verfahren nach einem der Ansprüche 1 oder 2, **dadurch gekennzeichnet, dass** ein Klebstoff, enthaltend ungesättigte Doppelbindungen, eingesetzt wird.

4. Verfahren nach einem der Ansprüche 1 bis 3, **dadurch gekennzeichnet, dass** ein Klebstoff, vernetzbar über kationische Initiatoren und Epoxidgruppen, eingesetzt wird.

5. Verfahren nach einem der Ansprüche 1 bis 4, **dadurch gekennzeichnet, dass** der Klebstoff eine Viskosität von weniger als 3000 mPas bei 80°C aufweist, insbesondere bis 50°C.

6. Verfahren nach einem der Ansprüche 1 bis 5, **dadurch gekennzeichnet, dass** der Klebstoff auf eine Seite eines Etiketts aufgetragen wird und dieser Teil mit einem anderen Teil des Etiketts als Rundum-Etikett verklebt wird.

7. Verfahren nach Anspruch 6, **dadurch gekennzeichnet, dass** das verklebte Etikett anschließend thermisch geschrumpft wird.

## Claims

1. Method for adhesively bonding labels with a UV-crosslinkable adhesive, wherein the adhesive is applied under heat onto a substrate, then adhesively bonded with a second substrate, finally irradiated with a UV-source, wherein the adhesive has a viscosity of less than 5000 mPas at a temperature between 20 and 80 °C, wherein the temperature during the irradiation process is below 50 °C in the substrate zone, **characterised in that** UV-emitting LED radiation sources are employed as the UV-source, and that the radiation source has a frequency band between 10 to 50 nm, the irradiation time ranges from 0.1 seconds to 1 second and the distance between label and irradiator is 10 mm to 10 cm.

2. Method according to claim 1, **characterised in that** the irradiation is carried out through a transparent substrate.

3. Method according to one of claims 1 or 2, **characterised in that** an adhesive comprising unsaturated double bonds is employed.

4. Method according to one of claims 1 to 3, **characterised in that** an adhesive is employed that is crosslinkable through cationic initiators and epoxide groups.

5. Method according to one of claims 1 to 4, **characterised in that** the adhesive has a viscosity of less than 3000 mPas at 80 °C, in particular up to 50 °C.

6. Method according to one of claims 1 to 5, **characterised in that** the adhesive is applied onto one side of the label and this part is adhesively bonded with another part of the label as a wrap-around label.

7. Method according to claim 6, **characterised in that** the adhesively bonded label is subsequently heat shrunk.

## Revendications

1. Procédé pour le collage d'étiquettes avec un adhésif réticulable par exposition à un rayonnement ultraviolet, dans lequel on applique l'adhésif à chaud sur un substrat, avant de le coller à un deuxième substrat, pour ensuite l'exposer à une source de rayonnement ultraviolet, l'adhésif présentant une viscosité inférieure à 5000 mPas à une température entre 20 et 80 °C, la température étant inférieure à 50 °C dans la zone du substrat au cours du processus d'exposition au rayonnement, **caractérisé en ce qu'**on met en oeuvre, à titre de source de rayonnement ultraviolet, des sources LED émettant un rayonnement ultraviolet, et **en ce que** la source de rayonnement présente une plage de fréquences entre 10 et 50 nm, la durée d'exposition au rayonnement s'élevant de 0,1 seconde à 1 seconde et la distance entre l'étiquette et l'émetteur de rayonnement s'élevant de 10 mm à 10 cm.

2. Procédé selon la revendication 1, **caractérisé en ce qu'**on effectue l'exposition au rayonnement à travers un substrat transparent.

3. Procédé selon l'une quelconque des revendications 1 ou 2, **caractérisé en ce qu'**on met en oeuvre un adhésif contenant des liaisons doubles insaturées.

4. Procédé selon l'une quelconque des revendications 1 à 3, **caractérisé en ce qu'**on met en oeuvre un adhésif réticulable via des initiateurs cationiques et des groupes époxyde.

5. Procédé selon l'une quelconque des revendications 1 à 4, **caractérisé en ce que** l'adhésif présente une viscosité inférieure à 3000 mPas à 80 °C, en particulier jusqu'à 50 °C.

6. Procédé selon l'une quelconque des revendications 1 à 5, **caractérisé en ce que** l'adhésif est appliqué sur un côté d'une étiquette, cette partie étant collée à une autre partie de l'étiquette pour obtenir une étiquette enveloppante.

7. Procédé selon la revendication 6, **caractérisé en ce qu'**on soumet ensuite l'étiquette collée à un retrait thermique.
